(19) Europäisches Patentamt
European Patent Office
Office européen des brevets

(11) Publication number: **0 180 960 B1**

(12) **EUROPEAN PATENT SPECIFICATION**

(45) Date of publication of patent specification: **06.03.91**

(51) Int. Cl.5: **D01F 6/62**, D01F 1/02, C08K 5/52, C08G 63/00

(21) Application number: **85114067.3**

(22) Date of filing: **05.11.85**

The file contains technical information submitted after the application was filed and not included in this specification

(54) **Melt spinning process.**

(30) Priority: **09.11.84 JP 236964/84**

(43) Date of publication of application:
**14.05.86 Bulletin 86/20**

(45) Publication of the grant of the patent:
**06.03.91 Bulletin 91/10**

(84) Designated Contracting States:
**DE FR GB**

(56) References cited:
**EP-A- 0 002 130**
**EP-A- 0 155 517**
**FR-A- 1 438 079**
**US-A- 3 985 705**
**EP-A- 0 019 349**
**DE-A- 2 633 944**
**GB-B- 1 507 207**

(73) Proprietor: **SUMITOMO CHEMICAL COMPANY, LIMITED**
**Kitahama 4-chome 5-33**
**Chuo-ku Osaka 541(JP)**

Proprietor: **JAPAN EXLAN COMPANY, LTD.**
**2-8, Dojimahama-2-chome Kita-ku**
**Osaka-shi Osaka 530(JP)**

(72) Inventor: **Sugimoto, Hiroaki**
**13-5, Kawanishicho-1-chome**
**Takatsuki-shi(JP)**
Inventor: **Hayatsu, Kazuo**
**11-8, Kamihozumi-2-chome**
**Ibaraki-shi(JP)**
Inventor: **Kobashi, Toshiyuki**
**1-6, Saidaijikami-3-chome**
**Okayama-shi(JP)**

(74) Representative: **Henkel, Feiler, Hänzel & Partner**
**Möhlstrasse 37**
**W-8000 München 80(DE)**

EP 0 180 960 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a melt spinning process stably practicable for a long period of time.

More specifically, the invention relates to a process for melt spinning of aromatic polyesters to produce aromatic polyester fibers having high strength and high modulus of elasticity, which process is stably practicable for a long period of time without occurrence of foaming.

Recently, aromatic polyesters showing anisotropy in the molten state have been found to give polyester fibers having high strength and high modulus of elasticity And the melt spinning process has many advantages such that no solvent is used and existing apparatus can be employed. However, the aromatic polyesters capable of giving polyester fibers having high strength and high modulus of elasticity requires a high processing (spinning) temperature for the spinning, and therefore at the spinning, occurrence of foaming due to the reactions such as decomposition, polymerization, cross-linking and the like cannot be avoided. This makes difficult to continue the spinning stably for a long period of time.

So far, different kinds of aromatic polyesters showing anisotropy in the molten state have been proposed, for example, in Published Examined Japanese Patent Application No. 482/1980 and the like. However, the embodiments disclosed therein are only on a laboratory scale and therefore not useful from industrial point of view. Thus, it has been desired to develop a melt spinning process industrially stably practicable for a long period of time.

From DE-A-2 633 944 and EP-A-O 155 517 it is known to stabilize polyesters which do not show optical anisotropy in molten state against thermal degradation. According to EP-A-0 019 349 copolyesters which do not show optical anisotropy in molten state can be stabilized against hydrolytic and/or thermal degradation by a combination of an aromatic isocyanate and an aliphatic phosphite. GB-B-1 507 207 discloses the melt spinning of polyesters showing optical anisotropy in molten state.

### SUMMARY OF THE INVENTION

An object of the present invention is to provide a process for melt spinning an aromatic polyester showing anisotropy in the molten state, which is practicable stably for a long period of time.

Another object of the present invention is to provide a melt spinning process for preventing occurrence of foaming due to reactions such as decomposition, polymerization, cross-linking and the like during the spinning of such aromatic polyester.

This invention provides a process for producing aromatic polyester fibers which comprises

mixing 100 parts by weight of an aromatic polyester showing optical anisotropy in the molten state with 0.03 to 0.5 part by weight of at least one of cyclic neopentanetetrayl-bis(octadecylphosphite) and 4,4'-diphenylene-bis[bis(2,4-di-tert-butylphenyl)-phosphite] and

melt spinning the resulting mixture.

### DESCRIPTION OF THE PREFERRED EMBODIMENTS

In the process of the present invention, an aromatic polyester showing anisotropy in the molten state is used.

The aromatic polyester to be used is the one capable of transmitting light at a temperature, at which the aromatic polyester becomes flowable, when the powdery polyester sample is put and heated on a heating sample stage placed between two polarizing plates which are at right angles (90°) from each other. Examples of the aromatic polyester are those prepared from aromatic dicarboxylic acids, aromatic diols and/or aromatic hydroxycarboxylic acids, and their derivatives, as disclosed in Published Examined Japanese Patent Application Nos. 18016/1981, 20008/1980 and the like. If desired, aromatic polyesters may be copolymers prepared from the aforesaid compounds with alicyclic dicarboxylic acids, alicyclic diols, aliphatic diols and their derivatives.

Examples of the aromatic dicarboxylic acids are terephthalic acid, isophthalic acid, 4,4'-dicarboxydiphenyl, 2,6-dicarboxynaphthalene, 1,2-bis(4-carboxyphenoxy)ethane and their derivatives substituted on the nucleus with alkyl, aryl, alkoxy or halogen.

Examples of the aromatic diols are hydroquinone, resorcinol, 4,4'-dihydroxydiphenyl, 4,4'-dihydroxybenzophenone, 4,4'-dihydroxydiphenylmethane, 4,4'-dihydroxydiphenylethane, 2,2-bis(4-hydroxyphenyl)-propane, 4,4'-dihydroxydiphenylether, 4,4'-dihydroxydiphenylsulfone, 4,4'-dihydroxydiphenylsulfide, 2,6-dihydroxynaphthalene, 1,5-dihydroxynaphthalene and their derivatives substituted on the nucleus with alkyl, aryl, alkoxy or halogen.

Examples of the aromatic hydroxycarboxylic acids are p-hydroxybenzoic acid, m-hydroxybenzoic acid, 2-hydroxynaphthalene-6-carboxylic acid, 1-hydroxynaphthalene-5-carboxylic acid and their derivatives substituted on the nucleus with alkyl, aryl, alkoxy or halogen.

Examples of the alicyclic dicarboxylic acids are trans-1,4-dicarboxycyclohexane, cis-1,4-dicarboxycyclohexane and their derivatives substituted on the nucleus with alkyl, aryl or halogen.

Examples of the alicyclic and aliphatic diols are trans-1,4-dihydroxycyclohexane, cis-1,4-dihydroxycyclohexane, ethylene glycol, 1,4-butanediol, xylylenediol and the like.

Of these aromatic polyesters prepared using a combination of the acid compounds and the hydroxyl compounds as described above, preferred are:

(i) a copolyester comprising p-hydroxybenzoic acid residue (40 to 70 mole %), the aromatic dicarboxylic acid residue (15 to 30 mole %) and the aromatic diol residue (15 to 30 mole %),

(ii) a copolyester prepared by the reaction of terephthalic acid and/or isophthalic acid with chlorohydroquinone, phenylhydroquinone and/or hydroquinone,

(iii) a copolyester comprising p-hydroxybenzoic acid residue (20 to 80 mole %) and 2-hydroxynaphthalene-6-carboxylic acid residue (20 to 80 mole %), and so on.

In the preparation of the aromatic polyester usable for the process of the present invention using the aforesaid starting materials, said materials as such or after esterification with an aliphatic or aromatic monocarboxylic acid or its derivative, or an aliphatic alcohol, a phenol or its derivative, can be subjected to polycondensation reaction according to, for example, a bulk polymerization, solution polymerization or suspension polymerization method known in this art. The reaction can be carried out at a temperature ranging from 150° to 360° C under atmospheric pressure or a reduced pressure ranging from 10 to 0.1 torr, if desired, in the presence of a polymerization catalyst such as Sb-, Ti- or Ge-containing compounds, a stabilizer such as phosphorus compounds and/or a filler such as $TiO_2$, $CaCO_3$, Talc and the like. The resulting polyester as such or after pulverization is heat-treated in an inert gas atmosphere or under a reduced pressure prior to the spinning. The polyester may be formed into a granule through an extruder prior to the heat-treatment.

The aromatic polyester usable in the present invention may be defined in terms of the molecular weight. However, there are problems such that depending on the composition and structure of the polymer, a solvent capable of dissolving the polymer uniformly can hardly be found, and accuracy in the measurement of molecular weight is questionable. Accordingly, the molecular weight cannot be used for the definition of the aromatic polyester usable in the present invention. For this reason, a "flowing temperature" is used therefor, which is a physical value corresponding to the molecular weight. In the present invention, the flowing temperature is defined to be a temperature, at which the aromatic polyester flows through a nozzle of 1 mm in diameter and 10 mm in length, and reaches an apparent viscosity of 4800 Pas (48,000 poise), when heated at a rate of 4° C/min. under a pressure of 9870 kPa (100 kg/cm²) using Flow tester CFT-500®, manufactured by Shimadzu Seisakusho in Japan.

In the present invention, it has been found that an aromatic polyester having a flowing temperature ranging from 280° to 380° C is useful for the spinning to produce desired polyester fibers having high strength and high modulus of elasticity. In case of using an aromatic polyester having a flowing temperature lower than that defined above, reactions readily occur at the molten state, and elongation percentage of the fiber becomes insufficient. Whereas, in case of using an aromatic polyester having a flowing temperature higher than that defined above, the decomposition and cross-linking reactions readily occur, and a load on the apparatus becomes large, because such polyester requires a higher processing (spinning) temperature.

In carrying out the process of the present invention, as the melt spinning apparatus, a conventional plunger type or screw type extruder may be employed. In carrying out the process continuously, the latter is preferred. As other apparatus such as gear pump and the like, existing ones may be employed.

A temperature suitable for the melt spinning in accordance with the present invention ranges from 280° to 420° C, preferably from 300° to 400° C for the reason described above. Even if the spinning is carried out within the temperature range as defined above using the aromatic polyester having the flowing temperature as defined above, a stable operation for a long period of time cannot be attained, because of a spinning temperature being as high as 280° C or higher. In the present invention, such problems can be solved by using a specific stabilizer. Generally speaking, stabilizers must be those usable for the spinning without prevention of the stable spinning conditions and giving no bad effects against the fibers to be produced. However, there have never been found stabilizers meeting with such requirements and suitable for the melt spinning of the aromatic polyester showing anisotropy in the molten state.

In carrying out the melt spinning of the aromatic polyester showing anisotropy in the molten state in accordance with the present invention, the stabilizer to be mixed with such aromatic polyester is at least one member as mentioned above.

4,4'-diphenylene-bis[bis(2,4-di-tert-butylphenyl)-phosphite e.g. is produced by Sandoz Co. and distributed under the designation Sandostab PEP-Q cyclic neopentanetetra-yl-bis(octadecylphosphite) e.g. is manufactured by Adeka Argus Co. and distributed under the designation PEP-8.

At least one member selected from the stabilizing compounds described above is mixed with the aromatic polyester, thereby preventing the occurrence of foaming, facilitating a stable operation of the spinning, and stabilizing the physical properties of the fibers obtained.

The stabilizing compound may be added during the polymerization carried out for the production of aromatic polyester, or to the produced aromatic polyester. The mixing can be carried out by a dry blend method wherein the compound is mixed with the polyester in the form of powder, granule or pellet at an ambient or elevated temperature, a method wherein the compound in the form of solution is mixed therewith, or a melt mixing method using an extruder or a kneader. Alternatively, the compound may be mixed directly at the time of spinning.

The stabilizing compound is used in an amount of 0.03 to 0.5 part by weight, preferably 0.05 to 0.4 part by weight, per 100 parts by weight of the aromatic polyester [hereinafter, the amount being expressed in terms of PHR (parts per hundred)]. Too small amounts, namely less than 0.03 PHR, exhibit no effect, whereas too large, namely more than 0.5 PHR, amounts rather bring about foaming and decomposition of the aromatic polyester to cause the break of single filament and soil of the spinnerette surface. When the stabilizing compound is used in an appropriate amount described above, the deterioration and decomposition of the aromatic polyester can be prevented during the melting, and the spinning can be practiced stably, and moreover incorporation of the foam into the fibers can be effectively prevented to stabilize the physical properties of fibers.

The fibers produced by the spinning in accordance with the present invention can be wound up or drawn as they are or after addition of an oiling agent. A rate of windup or drawdown ranges from 10 to 10,000 m/min, preferably 100 to 2,000 m/min from the viewpoint of the productivity and spinnability. The fineness and sectional shape of the fiber may very depending on the use. The fineness of 1 to 10 deniers is preferred from viewpoint of the strength and modulus of elasticity. The thus obtained fiber can be used as it is, or subjected to heat-treatment, drawing or a combination thereof, thereby enhancing the strength and modulus of elasticity much more.

The present invention is illustrated in more detail with reference to the following Examples, Reference Examples and Comparative Examples.

In these Examples, the tensile test of the fiber was conducted using an all-purpose tester No. 1130®, manufactured by Instron Co. under a sample distance of 20 mm and a tensile speed of 0.5 mm/min. The optical anisotropy was visually judged on the sample placed on a heating stage and heated at a rate of 25 °C/min under polarized light.

Reference Example 1

p-Acetoxybenzoic acid (7.20 kg, 40 moles), terephthalic acid (2.49 kg, 15 moles), isophthalic acid (0.83 kg, 5 moles) and 4,4'-diacetoxydiphenyl (5.45 kg, 20.2 moles) were placed in a polymerization vessel equipped with a comb-like stirrer. The mixture was heated under a nitrogen gas atmosphere, while being stirred. Polymerization was continued under vigorous stirring at 330 °C for 3 hours, during which acetic acid produced was removed out of the reaction system. Thereafter, the reaction mixture was gradually cooled and at 200 °C taken out of the system to obtain a desired polymer (10.88 kg). The yield was 97.8% of the theoretical value. The polymer obtained was pulverized using a hammer mill manufactured by Hosokawa Micron Co. to form particles of 2.5 mm or below in the particle size The polymer in the form of particle was treated in a rotary kiln under a nitrogen gas atmosphere at 280 °C for 5 hours, whereby a polymer having the flowing temperature of 326 °C was obtained. The optical anisotropy was observed at a temperature of 350 °C or higher.

Reference Example 2

Using the same reaction vessel as in Reference Example 1, a copolyester consisting of 2,5-diacetoxybiphenyl and terephthalic acid was synthesized. The flowing temperature thereof was found to be 318 °C,

and the optical anisotropy was observed at 340 °C or higher.

Example 1

Using the polyester obtained in Reference Example 1, the melt spinning was conducted by means of a screw type extruder with a spinnerette having a hole diameter of 0.12 mm, a hole length of 0.1 mm and a hole number of 150. Cyclic neopentanetetraylbis-(octadecylphosphite) having a melting point of 64 °C (Mark PEP-8),

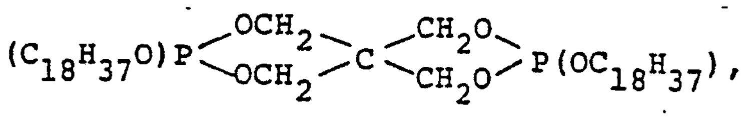

in an amount of 0.2 PHR was mixed with the polyester in a mixer kept at 95 °C (mixing time 30 minutes). The mixture was charged through a hopper, and the spinning was conducted at 365 °C. During the spinning, a stable operation was continued and filaments were uniformly taken out through the 150 holes of spinnerette. Thus, a transparent fiber of pale yellow color was obtained. The number of foams or voids, respectively present in the fiber was examined on the 150 fibers of 50 mm in length and counted to be 4.3 per meter of the fiber.

The fiber was treated under a nitrogen gas atmosphere at 320 °C for 3 hours, and thereafter the physical values thereof were found to be 3.47 deniers, 28.6 g/d in strength, 10.5% in distribution of the strength, 2.9% in elongation and 995 g/d in modulus of elasticity.

Comparative Example 1

Example 1 was repeated, provided that no phosphite was used. The number of foams present in the fiber obtained was counted to be 16.8 per meter of the fiber, and the physical values of the fiber after the heat-treatment were found to be 3.63 deniers, 22.6 d/g in strength and 16.6% in its distribution.

Comparative Example 2

Example 1 was repeated, provided that the phosphite was used in an amount of 3 PHR. During the spinning, breaks of filaments were observed numerously. Even when the spinning temperature was lowered to 360 °C, the spinnerette surface was also soiled. When the spinning temperature was lowered to 350 °C, the fiber obtained was made opaque and brittle.

Comparative Example 3

Using the polyester obtained in Reference Example 1, Example 1 was repeated provided that tris(p-nonylphenyl) phosphite (Sumilizer TNP, produced by Sumitomo Chemical Co.),

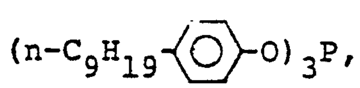

was used in an amount of 0.28 PHR. The spinning was continued favorably, and the foam in the fiber obtained was counted to be 6.2 per meter of the fiber.

Example 2

Using the polyester obtained in Reference Example 1, Example 1 was repeated, provided that 4,4'-diphenylene-bis[bis(2,4-di-tert-butylphenyl)phosphite] (Sandostab PEP-Q, produced by Sandoz Co.),

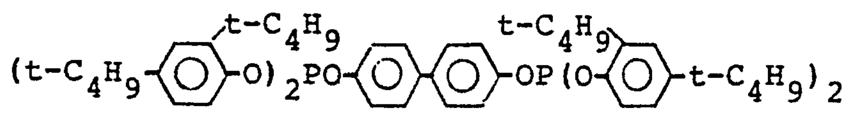

was used in an amount of 0.3 PHR, whereby the spinning was able to be continued faborably.

## Claims

1. A process for producing aromatic polyester fibers which comprises
mixing 100 parts by weight of an aromatic polyester showing optical anisotropy in the molten state with 0.03 to 0.5 part by weight of at least one of cyclic neopentanetetrayl-bis(octadecylphosphite) and 4,4'-diphenylene-bis[bis(2,4-di-tert-butylphenyl)phosphite] and
melt spinning the resulting mixture.

2. A process according to Claim 1, wherein the melt spinning is conducted at 280° to 420° C.

3. A process according to Claim 1, wherein the aromatic polyester is a copolyester comprising 40 to 70 mole % of p-hydroxybenzoic acid residue, 15 to 30 mole % of an aromatic dicarboxylic acid residue and 15 to 30 mole % of an aromatic diol residue, a copolyester prepared by reacting terephthalic acid and/or isophthalic acid with at least one of chlorohydroquinone, phenylhydroquinone and hydroquinone, or a copolyester comprising 20 to 80 mole % of p-hydroxybenzoic acid residue and 20 to 80 mole % of 2-hydroxynaphthalene-6 carboxylic acid residue.

4. A process according to Claim 1, wherein the flowing temperature of the aromatic polyester is from 280° to 380° C.

5. A process according to Claim 2, wherein
(1) the aromatic polyester is a copolyester comprising 40 to 70 % by mole of p-hydroxybenzolc acid residue, 15 to 30 % by mole of an aromatic dicarboxylic acid residue and 15 to 30 % by mole of an aromatic diol residue, and
(2) the flowing temperature of the aromatic polyester is from 280° to 380° C..

6. A process according to Claim 5, wherein the phosphorus compound is cyclic neopentanetetrayl-bis-(octadecylphosphite).

7. A process according to Claim 5, wherein the phosphorus compound is 4,4'-diphenylene-bis[bis(2,4-di-tert-butylphenyl)phosphite].

## Revendications

1. Procédé de fabrication de fibres de polyester aromatique, comprenant les opérations consistant à mélanger 100 parties en poids d'un polyester aromatique présentant une anisotropie optique à l'état fondu avec 0.03 à 0,5 partie en poids de l'un au moins du néopentanetétrayl-bis-(octadécylphosphite) cyclique et du 4,4'-diphénylène-bis-[bis-(2,4-di-tert.-butyl-phényl)-phosphite] et
à filer au fondu le mélange résultant.

2. Procédé selon la revendication I, dans lequel la filature au fondu est effectuée à une température de 280° à 420° C.

3. Procédé selon la revendication 1, dans lequel le polyester aromatique est un copolyester comprenant 40 à 70%, en moles de reste acide p-hydroxybenzoïque, 15 à 30% en moles d'un reste acide dicarboxylique aromatique et 15 à 30% en moles d'un reste diol aromatique, un copolyester préparé par réaction d'acide téréphtalique et/ou d'acide isophtalique avec l'une au moins de la chlorohydroquinone, de la phénylhydroquinone et de l'hydroquinone, ou un copolyester comprenant 20 à 80% en

moles de reste acide p-hydroxybenzoïque et 20 à 80% en moles de reste acide 2-hydroxynaphtalène-6-carboxylique.

4. Procédé selon la revendication 1, dans lequel la température d'écoulement du polyester aromatique se situe entre 280° et 380° C.

5. Procédé selon la revendication 2, dans lequel (1) le polyester aromatique est un copolyester comprenant de 40 à 70% en moles de reste acide p-hydroxybenzoïque, de 15 à 30% en moles d'un reste acide p-hydroxybenzoïque et de 15 à 30% en moles d'un reste diol aromatique et
(2) la température d'écoulement du polyester aromatique se situe entre 280° et 380° C.

6. Procédé selon la revendication 5, dans lequel le composé du phosphore est le néopentanetétrayl-bis-(octadécylphosphite) cyclique.

7. Procédé selon la revendication 5, dans lequel le composé du phosphore est le 4,4'-diphénylène-bis-[bis-(2,4-di-tert.-butylphényl)-phosphite].

## Ansprüche

1. Verfahren zur Herstellung aromatischer Polyesterfasern durch Vermischen von 100 Gewichtsteilen eines im erschmolzenen Zustand optische Anisotropie zeigenden aromatischen Polyesters mit 0,03 bis 0,5 Gewichtsteilen mindestens einer Verbindung, nämlich zyklisches Neopentantetrayl-bis-(octadecylphosphit) und 4,4'-Diphenylen-bis[bis(2,4-di-tert.-butylphenyl)phosphit], und Schmelzspinnen des erhaltenen Gemischs.

2. Verfahren nach Anspruch 1, dadurch gekennzeichnet, daß das Schmelzspinnen bei 280° C bis 420° C erfolgt.

3. Verfahren nach Anspruch 1, dadurch gekennzeichnet, daß der aromatische Polyester aus einem Mischpolyester mit 40 bis 70 Mol-% p-Hydroxybenzoesäureresten, 15 bis 30 Mol-% aromatischer Dicarbonsäurereste und 15 bis 30 Mol-% aromatischer Diolreste, einem durch Umsetzen von Terephthalsäure und/oder Isophthalsäure mit mindestens einer Verbindung, nämlich Chlorhydrochinon, Phenylhydrochinon und Hyrochinon, erhaltenen Mischpolyester oder einem Mischpolyester aus 20 bis 80 Mol-% p-Hydroxybenzoesäureresten und 20 bis 80 Mol-% 2-Hydroxynaphthalin-6-carbonsäureresten besteht.

4. Verfahren nach Anspruch 1, dadurch gekennzeichnet, daß die Fließtemperatur des aromatischen Polyesters 280° C bis 380° C beträgt.

5. Verfahren nach Anspruch 2, dadurch gekennzeichnet, daß
(1) der aromatische Polyester aus einem Mischpolyester mit 40 bis 70 Mol-% p-Hydroxybenzoesäureresten, 15 bis 30 Mol-% aromatischer Dicarbonsäurereste und 15 bis 30 Mol-% aromatischer Diolreste besteht und
(2) die Fließtemperatur des aromatischen Polyesters 280° C bis 380° C beträgt.

6. Verfahren nach Anspruch 5, dadurch gekennzeichnet, daß die Phosphorverbindung aus zyklischem Neopentantetrayl-bis(octadecylphosphit) besteht.

7. Verfahren nach Anspruch 5, dadurch gekennzeichnet, daß die Phosphorverbindung aus 4,4'-Diphenylen-bis-[bis(2,4-di-tert.-butylphenyl)phosphit] besteht.